# FASCICULE DE BREVET EUROPEEN

(11) **EP 0 437 396 B1**
(45) Date de publication et mention de la délivrance du brevet: **16.08.1995**
(21) Numéro de dépôt: 91400035.1
(22) Date de dépôt: 09.01.1991
(51) Int. Cl.: H04Q 7/18

(54) **Système de gestion et de commande de plusieurs appareils indépendants**
System zur Verwaltung und Steuerung von mehreren unabhängigen Apparaten
Management and control system for different independant apparatus

(30) Priorité: 10.01.1990 FR 9000225
(43) Date de publication de la demande: 17.07.1991
(73) Titulaire: REGIE NATIONALE DES USINES RENAULT S.A., 92109 Boulogne Billancourt (FR)
(72) Inventeur: Gueguen, Yves, F-92130 Issy-Les-Moulineaux (FR)
(74) Mandataire: Srour, Elie

(56) Documents cités:
- WO-A-86/03926
- PROCEEDINGS OF THE INTERNATIONAL CONGRESS ON TRANSPORTATION ELECTRONICS octobre 86, WARRENDALE (US) pages 99 - 106; K.KAWATA et al: "Digital LSI: The Key to Refining the Automotive Audio System"
- PROCEEDINGS OF THE INTERNATIONAL CONGRESS ON TRANSPORTATION ELECTRONICS octobre 86, WARRENDALE (US) pages 85 - 97; H.TAJIMA et al: "A Distributed Architecture Car Audio System"
- PATENT ABSTRACTS OF JAPAN vol. 5, no. 192 (E-85)(864) 8 décembre 81,& JP-A-56 114456
- NTZ vol. 40, no. 6, 1987, BERLIN (DE) pages 444 - 449; K.EHLERS: "Das Autoradio als Kern eines mobilen Kommunikationszentrums"

## Description

La présente invention concerne un système de gestion et de commande d'au moins deux appareils indépendants l'un de l'autre, comprenant notamment un matériel audio et un matériel de télécommunication, tels qu'un autoradio et un radiotéléphone installés dans un véhicule automobile.

Par la publication "Proccedings of the International Congrès on Transportation Electronics" d'octobre 1986 au nom de la Society of Automotive Engineers, on connaît un système de gestion et de commande de plusieurs appareils indépendants comprenant un moyen de commande extérieur directement contrôlé par l'utilisateur, un moyen d'affichage, un moyen de communication assurant l'interface entre ces derniers, et une unité d'instructions recevant les commandes de l'utilisateur transmises par le moyen de commande et transformant celles-ci en instruction directe pour l'un des appareils.

La présente invention a pour but de réduire les interventions de l'utilisateur dans un tel système de gestion et de commande.

Elle concerne un système de gestion et de commande d'au moins deux appareils indépendants l'un de l'autre, pourvus chacun d'une unité centrale dans laquelle sont mémorisés des messages codés, comprenant un moyen de commande extérieur contrôlé par l'utilisateur, un moyen d'affichage, un moyen de communication entre le moyen de commande extérieur d'une part et le moyen d'affichage et les appareils d'autre part avec lequel les appareils communiquent de façon permanente et un à la fois en échangeant des messages codés, et une unité d'instruction en communication avec un des appareils alors en mode actif, cette unité d'instruction recevant par l'intermédiaire du moyen de commande extérieur les commandes de l'utilisateur et transformant lesdites commandes en instruction directe pour cet appareil. Ce système est caractérisé en ce que l'appareil en mode actif est informé par les autres appareils alors en mode passif de leurs modifications de fonctionnement par l'échange de messages codés, et prend en compte ces modifications pour adapter son fonctionnement en conséquence et éventuellement modifier la gestion du moyen d'affichage de façon à pouvoir afficher un message envoyé par l'un des autres appareils.

Il en résulte qu'en pratique, lorsque l'utilisateur actionne le moyen de commande extérieur, dans le cas où la commande concerne un réglage de l'appareil en mode actif, seul cet appareil exécute la commande ; dans le cas où la commande concerne un changement de mode des appareils, l'un des appareils en mode passif reconnaît, dans l'unité de gestion, la commande qui lui est adressée pour passer en mode actif, l'appareil ayant transmis ladite commande passant à son tour en mode passif.

Selon l'invention, chaque appareil en mode passif informe l'appareil en mode actif de ses modifications de fonctionnement par échange de messages codés dans l'unité de gestion. L'appareil en mode actif prend alors en compte ces modifications pour adapter son fonctionnement en conséquence et éventuellement modifier la gestion du moyen d'affichage, de façon à pouvoir afficher un message envoyé par l'un des appareils en mode passif.

Le système de l'invention permet de gérer et de commander plusieurs appareils indépendants l'un de l'autre et pouvant être de type varié, par exemple des appareils audio, vidéo, de télécommunication, électroménager ou des matériels informatiques.

Le moyen de commande extérieur peut être relié directement à l'unité d'instruction du moyen de communication. Il peut également agir à distance par émission d'une onde électromagnétique vers l'unité d'instruction du moyen de communication qui effectue un traitement de l'information reçue pour envoyer une instruction correspondante à l'unité centrale de l'appareil en mode actif.

Le système de l'invention peut être utilisé pour la gestion et la commande de plusieurs appareils installés dans un endroit approprié, par exemple un salon, un bureau ou un espace choisi.

Une application particulièrement intéressante de l'invention consiste à gérer et commander un matériel audio conjointement avec un matériel de télécommunication, utilisés notamment comme équipement pour un véhicule, et en particulier pour un véhicule automobile.

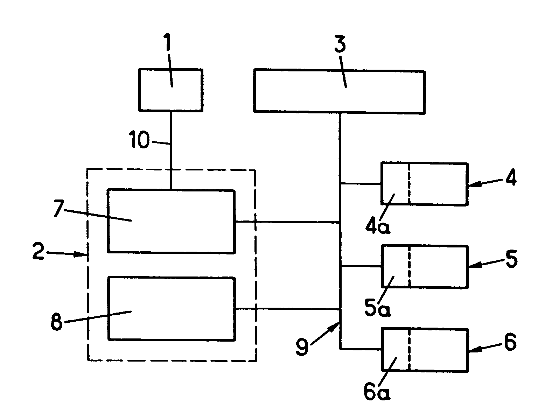

L'invention sera mieux comprise à l'étude de la description détaillée d'un mode de réalisation particulier de l'invention pris à titre nullement limitatif et illustré par le dessin unique annexé qui représente un schéma de fonctionnement du système de l'invention.

Pour cet exemple, on suppose que le système de l'invention est destiné à équiper un véhicule automobile et est intégré au tableau de bord du véhicule.

Comme montré sur la figure unique, le système de l'invention comprend un moyen de commande extérieur 1 connu sous le nom de "satellite", un moyen de communication 2, un moyen d'affichage ou afficheur 3, un matériel audio 4, un matériel de télécommunication 5 et un matériel d'assistance à la conduite 6. Le matériel audio 4 peut comprendre une autoradio, un lecteur de cassette et un lecteur de disque numérique. Dans la suite de la description on ne prend en compte que l'autoradio pour le matériel audio 4. Le matériel de télécommunication 5 est constitué d'un radiotéléphone dans cet exemple.

Le moyen de communication 2 comprend une unité d'instruction 7 et une unité de gestion 8 toutes deux reliées à un bus 9 auquel sont connectés également et respectivement l'afficheur 3, l'autoradio 4, le radiotéléphone 5 et le matériel d'assistance 6.

Le satellite 1 comporte un certain nombre de touches de commande et est installé dans le véhicule à un endroit facilement accessible par le conducteur du véhicule, par exemple au voisinage du volant du véhicule. Le satellite 1 est relié par une liaison 10 à l'unité d'instruction 7 du moyen de communication 2. L'unité d'instruction 7 effectue le traitement et la reconnaissance des commandes du conducteur ou d'un passager dans le véhicule, transmises par le satellite 1 et transforme lesdites commandes en des instructions compréhensibles par l'un des appareils 4, 5 et 6 via le bus 9.

Chaque appareil 4, 5 et 6 peut fonctionner indépendamment des autres appareils et comprend une unité centrale 4a, 5a, 6a permettant de gérer le fonctionnement de l'appareil et dans laquelle sont mémorisés un certain nombre de messages codés. Toutes les unités centrales 4a, 5a, 6a des appareils dialoguent avec l'unité de gestion 8 du moyen de communication 2 par l'intermédiaire du bus 9.

L'unité de gestion 8 comprend une partie réservée aux échanges de messages codés et une partie de contrôle d'accès à la partie d'échanges. Le dialogue entre les unités centrales 4a, 5a, 6a et l'unité de gestion 8 se déroule de façon permanente. La partie de contrôle d'accès autorise une seule des unités centrales 4a, 5a, 6a, à un instant donné, à dialoguer avec la partie d'échanges de l'unité de gestion 8.

Le satellite 1 sélectionne l'un des appareils comme le seul interlocuteur de l'unité d'instruction 7 du moyen de communication. L'appareil sélectionné est dans ce cas en mode actif et gère directement l'afficheur 3. Les autres appareils sont en mode passif, ne dialoguent pas avec l'unité d'instruction 7 et ne contrôlent pas directement l'afficheur 3.

Toute modification du fonctionnement de l'un ou plusieurs des appareils est perçue par l'ensemble des appareils grâce à leur échange de messages codés dans l'unité de gestion 8. Lorsqu'il y a une commande de l'utilisateur transmise par le satellite 1, l'appareil en mode actif reçoit l'instruction correspondante depuis l'unité d'instruction 7 et transmet cette instruction vers l'unité de gestion 8 pour informer les autres appareils en mode passif. Inversement, lorsqu'il y a une modification de fonctionnement de l'un des appareils en mode passif, cet appareil informe l'unité de gestion 8 de cette modification. L'appareil en mode actif apprend cette modification grâce à son dialogue permanent avec l'unité de gestion 8 et effectue, s'il y a lieu, des modifications correspondantes, notamment pour la gestion de l'afficheur 3.

Afin de faciliter la compréhension du fonctionnement du système de l'invention, un exemple concret de son application décrite ci-dessus est donné par la suite. Par souci de simplification, on choisit une autoradio et un radiotéléphone pour les matériels audio et de télécommunication respectivement.

Dans le cas où le satellite 1 est en mode radio, l'autoradio 4 est en mode actif et gère l'afficheur 3 pour ses propres besoins. Lorsqu'il y a un appel téléphonique venant de l'extérieur, le radiotéléphone 5 en mode passif envoie un message codé à l'autoradio 4 par l'intermédiaire de l'unité de gestion 8 du moyen de communication 2. L'autoradio 4 en mode actif peut alors, selon le type du message reçu, baisser le volume de son et/ou autoriser l'affichage d'un message sur l'afficheur 3 par exemple.

Si l'utilisateur du système, soit le conducteur soit un passager du véhicule, conserve le mode radio du satellite 1, il peut alors décrocher le combiné du téléphone pour engager une conversation avec son correspondant. Pendant ce temps, l'autoradio 4 fonctionne avec un niveau de son réduit. A la fin de la conversation, l'utilisateur raccroche son combiné téléphonique, le radiotéléphone 5 indique cette modification de fonctionnement à l'autoradio 4 qui rétablit le niveau normal de son et gère de nouveau complètement l'afficheur 3.

Si lors d'un appel venant de l'extérieur, l'utilisateur sélectionne le mode téléphone sur le satellite 1, la commande traitée par l'unité d'instruction 7 est reçue par l'autoradio 4 en mode actif. Cette commande est transmise à l'unité de gestion 8 dans laquelle le radiotéléphone 5 reçoit la commande et passe en mode actif, l'autoradio 4 passant à son tour en mode passif. Le radiotéléphone 5 gère alors complètement l'afficheur 3 qui peut afficher des messages transmis par le correspondant. Le radiotéléphone peut comporter un microphone auquel l'utilisateur peut parler directement avec son correspondant sans décrocher le combiné téléphonique, ce qui permet à l'utilisateur d'avoir les mains libres tout en tenant la conversation avec son correspondant. L'autoradio 4 fonctionne à un niveau réduit de son pendant la conversation téléphonique. Le radiotéléphone 5 reste en mode actif après l'appel téléphonique si l'utilisateur ne change pas le mode du satellite 1.

Le système de l'invention fonctionne de la même façon que précédemment décrite lorsque c'est l'utilisateur qui appelle un correspondant extérieur.

Dans le cas où l'un des appareils est défaillant, l'unité de gestion 8 peut détecter cette défaillance de fonctionnement et exclut cet appareil dans ses échanges de dialogue avec les autres appareils, et peut également en informer l'appareil en mode actif qui affiche un message sur l'afficheur 3 indiquant la défaillance de l'appareil en question.

## Revendications

1. Système de gestion et de commande d'au moins deux appareils (4, 5, 6) indépendants l'un de l'autre, pourvus chacun d'une unité centrale (4a, 5a, 6a) dans laquelle sont mémorisés des messages codés, comprenant un moyen de commande extérieur (1) contrôlé par l'utilisateur, un moyen d'affichage (3), un moyen de communication (2) entre le moyen de commande extérieur (1) d'une part et le moyen d'affichage (3) et les appareils (4, 5, 6) d'autre part avec lequel les appareils (4, 5, 6) communiquent de façon permanente et un à la fois en échangeant des messages codés, et une unité d'instruction (7) en communication avec un des appareils alors en mode actif, cette unité d'instruction (7) recevant par l'intermédiaire du moyen de commande extérieur (1) les commandes de l'utilisateur et transformant lesdites commandes en instruction directe pour cet appareil, système caractérisé en ce qu'il comprend des moyens pour que l'appareil en mode actif soit informé par les autres appareils alors en mode passif de leurs modifications de fonctionnement par l'échange de messages codés, et des moyens de prise en compte de ces modifications pour adapter son fonctionnement en conséquence et éventuellement modifier la gestion du moyen d'affichage (3) de façon à pouvoir afficher un message envoyé par l'un des autres appareils.

2. Système selon la revendication 1, caractérisé par le fait que l'appareil en mode actif est directement sélectionné par le moyen de commande extérieur (1) et gère par son unité centrale le moyen d'affichage (3).

3. Système selon la revendication 1 ou 2, caractérisé par le fait que toute commande de l'utilisateur via le moyen de commande extérieur (1) est reçue et transmise à l'unité de gestion (8) par l'unité centrale de l'appareil en mode actif et est perçue par les appareils en mode passif grâce à leur communication avec l'unité de gestion, de sorte que lorsque la commande concerne un réglage de l'appareil en mode actif, seul cet appareil exécute la commande; lorsque la commande concerne un changement de mode, l'un des appareils en mode passif reconnaît la commande qui lui est adressée et passe en mode actif, l'appareil ayant transmis ladite commande passant à son tour en mode passif.

4. Système selon l'une quelconque des revendications précédentes, caractérisé par le fait que les appareils comprennent au moins un matériel audio (4) et un matériel de télécommunication (5).

5. Système selon la revendication 4, caractérisé par le fait que le matériel audio comprend une autoradio, et que le matériel de télécommunication comprend un radiotéléphone.

6. Système selon la revendication 5, caractérisé par le fait qu'il est installé dans un véhicule automobile.

7. Système selon l'une des revendications 1 à 5, caractérisé par le fait qu'il est installé dans un lieu adapté, tel qu'un salon, un bureau ou autre.

## Patentansprüche

1. System zur Verwaltung und Steuerung wenigstens zweier voneinander unabhängiger Apparate (4, 5, 6), deren jeder mit einer zentralen Einheit (4a, 5a, 6a) versehen ist, in der codierte Botschaften gespeichert sind, mit einer äußeren Steueranordnung (1), die vom Benutzer kontrolliert wird, einer Anzeigeanordnung (3), einer Kommunikationsanordnung (2) zwischen der äußeren Steueranordnugn (1) einerseits und der Anzeigeanordnung (3) und den Apparaten (4, 5, 6) andererseits, mit der die Apparate (4, 5, 6) ständig sowie einzeln kommunizieren unter Austausch der codierten Botschaften und mit einer Instruktionseinheit (7), die mit dem sich im aktiven Zustand befindlichen Apparat kommuniziert, wobei diese Instruktionseinheit (7) die Befehle des Benutzers über die äußere Steueranordnung (1) erhält und diese Befehle in direkte Instruktionen für diese Apparate umwandelt, dadurch gekennzeichnet, daß es eine Anordnung aufweist, damit der sich im aktiven Zustand befindende Apparat von den anderen Apparaten, während diese sich im passiven Zustand befinden, über deren Funktionsänderungen durch den Austausch codierter Botschaften informiert wird und eine Anordnung aufweist, zur Berücksichtigung dieser Veränderungen, um den Betrieb dementsprechend anzupassen und gegebenenfalls die Verwaltung der Anzeigeanordnung (3) derart zu verändern, daß eine von einem der anderen Apparate abgegebene Botschaft angezeigt wird.

2. System nach Anspruch 1, dadurch gekennzeichnet, daß der sich im aktiven Zustand befindende Apparat direkt ausgewählt wird durch die äußere Steueranordnung (1) und über seine zentrale Einheit die Anzeigeanordnung (3) steuert.

3. System nach Anspruch 1 oder 2, dadurch gekennzeichnet, daß jeglicher Befehl des Benutzers über die äußere Steuereinheit (1) erhalten und der Verwaltungseinheit (8) über die zentrale Einheit des sich im aktiven Zustand befindenden Apparates zugeführt wird und den sich im passiven Zustand befindenden Apparaten mitgeteilt wird aufgrund deren Kommunikation mit der Verwaltungseinheit, dergestalt, daß, wenn der Befehl eine Einstellung des sich im aktiven Zustand befindenden Apparates betrifft, ausschließlich dieser Apparat den Befehl ausführt; sofern der Befehl eine Änderung des Zustandes betrifft, erkennt einer der sich im passiven Zustand befindenden Apparate den ihm zugeführten Befehl und wechselt in den aktiven Zustand über, wobei der diesen Befehl übertragen habende Apparat seinerseits in den passiven Zustand übergeht.

4. System nach einem der vorhergehenden Ansprüche, dadurch gekennzeichnet, daß die Apparate wenigstens ein Audiogerät (4) und ein Telekommunikationsgerät (5) aufweisen.

5. System nach Anspruch 4, dadurch gekennzeichnet, daß das Audiogerät ein Autoradio umfaßt und daß das Telekommunikationsgerät ein Funktelefon umfaßt.

6. System nach Anspruch 5, dadurch gekennzeichnet, daß es in einem Kraftfahrzeug installiert ist.

7. System nach einem der Ansprüche 1 bis 5, dadurch gekennzeichnet, daß es an einem entsprechenden Ort beispielsweise einem Zimmer, einem Büro oder dgl. installiert ist.

## Claims

1. System of management and control of at least two apparatuses (4, 5, 6) which are independent of one another, each provided with a central unit (4a, 5a, 6a) in which coded messages are memorised, comprising an external control means (1) controlled by the user, a display means (3), a communication means (2) between the external control means (1) on the one hand, and the display means (2) and the apparatuses (4, 5, 6) on the other hand, with which the apparatuses communicate in a continuous manner and one at a time by exchanging coded messages, and an instruction unit (7) in communication with one of the apparatuses currently in active mode, this instruction unit (7) receiving commands from the user by means of the external control means (1), and transforming said commands into a direct instruction for this apparatus, characterised in that it comprises means for the apparatus in active mode to be informed by the other apparatuses currently in passive mode of their changes in operation by exchange of coded messages, and means for taking these changes into account in order to adapt its functioning as a consequence and possibly to change the management of the display means (3) such as to be able to display a message sent by one of the other apparatuses.

2. System according to claim 1, characterised by the fact that the apparatus in active mode is directly selected by the external control means (1) and manages the display means (3) by means of its central unit.

3. System according to claim 1 or 2, characterised by the fact that any commands from the user via the external control means (1) is received and transmitted to the management unit (8) by the central unit of the apparatus in active mode and is sensed by the apparatuses in passive mode by virtue of their communication with the management unit, such that when the command relates to an adjustment of the apparatus in active mode, only this apparatus carries out the command; when the command relates to a change in mode, the apparatus in passive mode recognises the command addressed to it and passes into active mode, the apparatus having transmitted said command passing in turn into passive mode.

4. System according to any one of the preceding claims, characterised by the fact that the apparatuses comprise at least one piece of audio equipment (4) and one piece of telecommunications equipment (5).

5. System according to claim 4, characterised by the fact that the audio equipment comprises a car radio, and that the telecommunications equipment comprises a radio-telephone.

6. System according to claim 5, characterised by the fact that it is installed in an automotive vehicle.

7. System according to one of claims 1 to 5, characterised by the fact that it is installed in a suitable place, such as a living room, a bureau or another place.
